(19) Europäisches Patentamt

European Patent Office

Office européen des brevets

(11) Veröffentlichungsnummer: **0 618 359 A2**

(12) **EUROPÄISCHE PATENTANMELDUNG**

(21) Anmeldenummer: **94106742.3**

(22) Anmeldetag: **20.06.90**

(51) Int. Cl.⁵: **F02P 1/08**, F02P 9/00, F02P 5/15

Diese Anmeldung ist am 29 - 04 - 1994 als Teilanmeldung zu der unter INID-Kode 60 erwähnten Anmeldung eingereicht worden.

(30) Priorität: **31.05.90 DE 4017478**

(43) Veröffentlichungstag der Anmeldung:
**05.10.94 Patentblatt 94/40**

(60) Veröffentlichungsnummer der früheren Anmeldung nach Art. 76 EPÜ: **0 411 292**

(84) Benannte Vertragsstaaten:
**DE IT SE**

(71) Anmelder:
**PRÜFREX-ELEKTRO-APPARATEBAU INH. HELGA MÜLLER, GEB. DUTSCHKE**
**Egersdorfer Strasse 36**
**D-90553 Cadolzburg (DE)**

(72) Erfinder: **Werner, Erhard, Dipl.-Ing.(FH)**
**Ostlandstrasse 16**
**DE-90556 Cadolzburg (DE)**

(74) Vertreter: **Götz, Georg Alois**
**Patentanwälte Czowalla Matschkur & Partner**
**Dr. Kurt-Schumacher-Strasse 23**
**D-90402 Nürnberg (DE)**

(54) **Zündanlage mit Vorrichtung zur Drehzahlbegrenzung und Leerlaufstabilisierung einer Brennkraftmaschine.**

㉗ Zündanlage für Brennkraftmaschinen, mit einem Magnetgenerator, der abhängig von der Maschinen-Drehstellung eine Lade-Wechselspannung für ein Energiespeicherelement induziert, das von einem synchron zu der Wechselspannung betätigten Zünd-schalter zum Auslösen der Zündung entladen wird, mit einem Zeitgeber-Modul, das auf die Wechsel-spannung mit der Erzeugung eines Betätigungs-Sperrsignals für den Zündschalter für die Dauer eines ersten Zeitintervalls anspricht, welches einer Drehzahl-Obergrenze für die Brennkraftmaschine entspricht, wobei das Zeitgeber-Modul auf die Wechselspannung mit der Erzeugung eines separa-ten Verzögerungssignals zur verzögerten Betätigung des Zündschalters für die Dauer eines zweiten län-geren Zeitintervalls anspricht, das einer Drehzahl-Untergrenze, vorzugsweise der Leerlaufdrehzahl, der Maschine entspricht.

FIG. 5

EP 0 618 359 A2

Die Erfindung betrifft eine Zündanlage für Brennkraftmaschinen gemäß Oberbegriff des Anspruchs 1.

Bei derartigen bekannten Zündsystemen (vgl. europäische Patentanmeldung EP 0 411 292 A2) ist vor allem einer mit steigender Drehzahl zunehmenden Frühverstellung der Zündung Rechnung getragen. Bei Brennkraftmaschinen, die z.B. in Rasenmahern oder Kettensägen eingesetzt sind, besteht darüberhinaus noch das Bedürfnis, die Überschreitung einer Oberdrehzahlgrenze zu verhindern.

Zur Drehzahlbegrenzung wird bei einer bekannten Zündanlage (DE-OS 26 30 261) mit den eingangs genannten Merkmalen vorgeschlagen, ein Zeitgebermodul vorzusehen, das auf die Wechselspannung mit der Erzeugung eines Betätigungs-Sperrsignals zu den Zündschalter reagiert, wobei es das Sperrsignal während eines Zeitintervalls aktiv hält, welches im Hinblick auf eine Drehzahl-Obergrenze für die Brennkraftmaschine gewählt ist.

Periodisch mit jeder Maschinen-Umdrehung wird bei einer bestimmten Drehstellung eine Folge von Wechselspannungshalbwellen ausgelöst (wie z.B. in der eingangs genannten älteren Fundstelle beschrieben), welche dem Aufladen des Energiespeicherelements und/oder dem Triggern der Zündung über den das Energiespeicherelement entladenden Zündschalter dienen. Aufgrund des Auftretens der Wechselspannung wird gleichzeitig das Zeitgebermodul aufgesetzt bzw. gestartet zur Generierung einer voreingestellten konstanten Zeitspanne. Mit steigender Drehzahl wird die Periode, mit der die Wechselspannung regelmäßig auftritt, kürzer, die vom Zeitgeber generierte Zeitspanne jedoch bleibt konstant. Unterschreitet die Periode für das regelmäßige Auftreten der Wechselspannung die generierte Zeitspanne, wird eine Zündung aufgrund des vom Zeitgeber ausgegebenen Sperrsignals an den Zündschalter unterbunden, so daß eine weitere Drehzahlerhöhung nicht mehr möglich ist. Erst nach Ablauf einer generierten Zeitspanne inaktiviert der Zeitgeber das Sperrsignal, wodurch weitere Zündungen wieder freigegeben sind. Diese erfolgen mit erneutem Autreten von induzierter Wechselspannung und gleichzeitig wird der Zeitgeber zur erneuten Generierung der voreingestellten Zeitspanne bzw. -dauer unter zeitgleichem Setzen des Sperrsignals gestartet.

Ein entsprechendes Funktionsprinzip ist auch aus den Vorveröffentlichungen DE 37 11 300 A1 (z.B. Figuren 3, 4) und der US 4 594 978 entnehmbar, denn beide vermitteln die Lehre, den Triggerimpuls für den Zündschalter zur Entladung des Energiespeicherelements (Kondensator 71 bzw. 22) dann zu unterbinden, wenn eine der Drehzahl entsprechende Zeitdauer kleiner wird als eine von einer Zeitstufe vorgegebene und einer Drehzahl-Obergrenze der Maschine entprechende Zeitdauer.

Aus den Vorveröffentlichungen DE-PS 38 17 471, DE-OS 36 08 740 und DE-PS 34 13 089 geht übereinstimmend hervor, die Drehzahl-Begrenzung über eine in einem Festwertspeicher abgelegte Zündverstell-Kennlinie herbeizuführen. Nach der Vorveröffentlichung DE-OS 30 06 288, Seite 9, ist zur Drehzahlbegrenzung im Festwertspeicher eine Information abzulegen, die bei Überschreitung der maximal zulässigen Drehzahl der Brennkraftmaschine jedes zweite Zündsignal am Ausgang eines Mikrorechners unterdrückt. Mit anderen Worten, es wird eine Halbierung der Anzahl der Zündimpulse vorgeschlagen.

Bei einer bekannten Zündanlage für Brennkraftmaschinen (DE 31 37 550 C2) ist eine Drehzahlbegrenzungsschaltung mit einem Timer-Baustein vorgesehen, der bei Triggerung durch eine Wechselspannung im Primärkreis einen Schaltimpuls fester Zeitdauer erzeugt. Dieser Schaltimpuls dient dem Zünden eines Steuerthyristors, wodurch mittelbar die Betätigung eines Zündschalters in einem genau spezifizierten Zeitpunkt unterbunden werden soll. Allerdings kann das Sperren der Zündung nur dann erfolgen, wenn während des Zündimpulses zwischen der Anode und der Kathode des Steuerthyristors bereits ausreichend positive Spannung anliegt. Dieser kann solchenfalls die für den Steuertransistor erforderliche Steuerspannung unterdrücken, indem ein Aufladen des die Steuerenergie speichernden Kondensators verhindert wird. Die Zündung wird ausgelöst, wenn die Spannung am Kondensator eine Triggerschwelle überschreitet, so daß der dabei betätigte Steuertransistor den Zündschalter öffnet. Die Zündung wird stets während der zweiten negativen Welle der vom Magnetgenerator induzierten Wechselspannung ausgelöst. Kurz vor dem Spannungsnulldurchgang zwischen erster und zweiter Halbwelle entsteht am Ausgang des Timer-Bausteins der genannte Schaltimpuls, dessen Dauer durch ein RC-Glied bestimmt ist. Der Schaltimpuls wird auf dem Steuereingang des Steuerthyristors gegeben. Wenn während des Schaltimpulses die Spannung des Magnetgenerators genügend negativ ist, bleibt der Steuerungsthyristor in leitendem Zustand und verhindert dabei ein Aufladen des Kondensators für die Speicherung von Steuerenergie. Folglich unterbleibt die Zündung. Für die Sperrung der Zündung ist der zeitliche Abstand zwischen dem Ende der ersten und dem Beginn der zweiten Halbwelle der induzierten Primärspannung maßgebend. Mit anderen Worten, die Sperrung der Zündung wird ausschließlich in Reaktion auf ein "zur kurzes Zeitintervall" zwischen zwei direkt aufeinanderfolgenden Halbwellen ausgelöst.

Schließlich ist noch ein Zündsystem mit einer Überlauf-Verhinderung für einen Verbrennungsmotor bekannt (US 4 343 273): Eine Steuerschaltung versetzt einen Schalttransistor, der einen Hauptthyristor ansteuert, für eine bestimmte Zeit in leitenden Zustand, um das vom Magnetgenerator abgeleitete Zündsignal zu unterbrechen. Der Steuerschaltkreis weist einen Integrator auf, der einer konstanten Spannungsquelle parallel geschaltet ist, um daraus eine mit der Zeit zunehmend ansteigende Spannung zu gewinnen. Die Steuerschaltung besitzt ferner einen Spannungsteiler, um in Verbindung mit der Konstant-Spannungsquelle eine Referenzspannung zu erzeugen. Ein Transistorschaltkreis der Steuerschaltung vergleicht die Ausgangsspannung des Integrators mit der Ausgangsspannung des Spannungsteilers, bis der Ausgang des Integrators die Referenzspannung des Teilers erreicht. Die Zeitspanne, während welcher das Steuersignal im Zündschalter zu dessen Durchschaltung zugeführt wird, bleibt präzise konstant, ungeachtet einer Änderung der Drehzahl des Verbrennungsmotors. Erhöht sich diese Drehzahl und überschreitet einen Normalbereich, wird das Auftreten des Zündsignals des Magnetgenerators frühverstellt, so daß sich das Zündsignal zeitlich mit der vorbestimmten Zeitspanne teilweise überlappt. Daraus resultiert eine Verzögerung der Zündzeitsteuerung und eine Drehzahlbegrenzung für den Verbrennungsmotor.

Um gegenüber all diesem Stand der Technik auch noch eine Stabilisierung der Lehrlaufdrehzahl der Brennkraftmaschine zu erreichen, wird das der Erfindung zugrundeliegende Problem aufgeworfen, in diesem Bereich eine Verminderung der Frühverstellung des Zündzeitpunkts zu bewirken. Zur Lösung dieses Problems wird erfindungsgemäß vorgeschlagen, daß das Zeitgeber-Modul auf die Wechselspannung mit der Erzeugung eines weiteren separaten Verzögerungssignals zur verzögerten Betätigung des Zündschalters reagiert; dieses Verzögerungssignal wird für die Dauer eines zweiten längeren Zeitintervalls erzeugt, das einer Drehzahl-Untergrenze, vorzugsweise der Leerlaufdrehzahl, der Maschine entspricht. Dadurch wird bei der Drehzahl-Untergrenze, insbesondere Leerlaufdrehzahl für die Zündverstellkurve der Brennkraftmaschine ein Einbruch erzeugt, der sich vorteilhaft auf die Stabilität im Leerlauf auswirkt. Die verzögerte Betätigung des Zündschalters läßt sich vorteilhaft durch ein Verzögerungsglied realisieren, das vom Verzögerungssignal des Zeitgebers aktiviert wird. Die induzierte Wechselspannung wird dann über das Verzögerungsglied, beispielsweise ein RC-Tiefpaß, dem Betätigungseingang des Zündschalters zu dessen Triggerung verzögert zugeführt.

In Weiterbildung dieses erfindungsgemäßen Zündsystems eignen sich zur Realisierung des Zeitgebers an sich bekannte und auf dem Markt kostengünstig erhältliche Baukomponenten wie Vorwahlzähler, Zeitschalter oder Monoflops, die jeweils so beschaltet sind, daß sie mittels der Wechselspannung in ihren Ausgangs- bzw. Startzustand rücksetzbar sind. Andererseits liegt es auch im Rahmen der Erfindung, den Zeitgeber softwaremäßig zu realisieren, nämlich in einem Mikrocomputer als Software-Routine zu implementieren, was vorzugsweise unter Einsatz eines an sich bekannten programmierbaren Zählerbausteins erfolgen kann; um dabei das mit der Wechselspannung synchronisierte Rücksetzen bzw. Starten des Zeitgebers durch den Mikrocomputer zu ermöglichen, sind für diesen noch an sich bekannte Sensormittel (Schwellwert-Komperatoren, AD-Wandler) zum Erfassen des Auftretens der Wechselspannung anzuordnen.

Beim Synchronisieren des Betriebs des Zeitgebers mit der Wechselspannung stellt sich das Problem, diese dem Zeitgeber zum Erfassen geeignet aufzubereiten und/oder zur Signalerfassung zu formen. Zur Lösung wird in Weiterbildung der Erfindung ein Anpaßmodul bzw. -netzwerk vorgeschlagen, mittels welchem pro Maschinenumdrehung eine oder mehrere Wechselspannungs-Halbwellen selektiert, gegebenenfalls gleichgerichtet und/oder invertiert und dem Zeitgeber in dessen Rücksetzeingang zugeführt werden.

Mit Vorteil durchläuft jede Halbwelle auf ihrem Weg zum Start- bzw. Rücksetzeingang des Zeitgebers wenigstens ein Laufzeitglied, das eine Zeitverzögerung entsprechend der Mindest-Betätigungszeit des Zündschalters realisiert. Der erzielte Vorteil besteht darin, daß nicht betriebsgerechtes Start- bzw. Rücksetzen des Zeitgebers und damit verbunden zu frühes Ausschalten des Zündschalters weitgehend verhindert ist: vom Zündvorgang her rührende Störspikes können erst den Zeitgeber neu zum Sperren der Zündung aufsetzen, wenn das Energiespeicherelement für die Zündung ausreichend entladen worden ist, wofür der Zündschalter eine Mindestzeit benötigt. Mithin dient das Vorsehen von Laufzeitgliedern der Erhöhung der Zünd- und Betriebssicherheit.

Um in Zusammenhang mit Laufzeitgliedern im niedrigen oder mittleren Drehzahlbereich gleichwohl eine schnelle, praktisch unverzögerte Zündung zu gewährleisten, ist nach einer Weiterbildung vorgesehen, daß pro Maschinen-Umdrehung wenigstens eine Halbwelle, vorzugsweise die erste Halbwelle der Wechselspannung, dem Zeitgeber zusätzlich unter logischer UND-Verknüpfung mit dessen Sperrsignal-Ausgang zugeführt wird. Hat der Zeitgeber wegen Ablauf der von ihm generierten Zeitdauer das Sperrsignal zurückgenommen, wird die von der Wechselspannungs-Halbwelle resultierende Information im Zuge der UND-Verknüpfung mit logisch "Null" gewichtet bzw. bewertet, so daß der Zeitgeber nicht neu gestartet bzw. das Sperrsignal für den Zündschalter nicht neu gesetzt wird. Läuft die Brennkraftmaschine im Bereich der oberen Drehzahlgrenze, werden von Halbwellen resultierende Informationen mit logisch "Eins" gewichtet bzw. bewertet, so daß der Start- bzw. Rücksetzeingang des Zeitgebers und damit das Sperrsignal umgehend neu aktiviert werden.

Erzeugt der Magnetgenerator pro Maschinenumdrehung mehr als zwei Halbwellen, werden insbesondere aufgrund von Hysterese-Verlusten die Zeitabstände zwischen der zweiten und den nachfolgenden Halbwellen größer als zwischen der ersten und der zweiten Halbwelle. Diese Erscheinung prägt sich besonders im niederen bzw. unteren Drehzahlbereich der Brennkraftmaschine aus. Um den genannten größeren Zeitabstand zu überbrücken, ist nach einer vorteilhaften Erfindungsweiterbildung ein Speicherelement, beispielsweise ein Flipflop, vorgesehen, welches ein den Zeitgeber zu dessen Rücksetzen zugeführtes Merksignal speichert, wobei es von einer Halbwelle geladen und von einer anderen - entweder vorausgehenden oder nachfolgenden - Halbwelle gelöscht wird. Hierdurch wird die von der zweiten und gegebenenfalls nachfolgenden Halbwellen resultierende Rücksetzinformation für den Zeitgeber solange festgehalten, bis die unmittelbar benachbarte Halbwelle eintrifft; dabei wird während des Zeitabstands zwischen den beiden aufeinanderfolgenden Halbwellen der Zeitgeber stets im Rücksetz- bzw. Startzustand gehalten, so daß das Sperrsignal unterdrückt bleibt und die Zündung sich frei entfalten kann.

Zur Erzielung einer kompakten Bauweise im Hinblick auf den Einsatz in kleinen Brennkraftmaschinen ist es von Vorteil, wenn nach einer Weiterbildung der Erfindung das Anpaßmodul - gegebenenfalls einschließlich der Laufzeitglieder, UND-Gatter und/oder des Speicherelements - mit dem Zeitgeber baulich zu einem integrierten Schaltkreis zusammengefaßt ist. Um auch den Einsatz "vor Ort", wo keine Möglichkeit des Netzanschlusses existiert, zu ermöglichen, besteht eine andere zweckmäßige Weiterbildung darin, daß zur Stromversorgung des Zeitgeber- und/oder gegebenenfalls Anpaßmoduls oder integrierten Schaltkreises ein weiteres Energiespeicherelement angeordnet ist, das über die vom Magnetgenerator induzierte Wechselspannung aufgeladen wird. Da hierdurch die Maschinen-Drehleistung indirekt zur Stromerzeugung verwendet wird, ist ein besonderes Batterieelement nicht mehr notwendig.

Bei der Synchronisation von Zeitgeber-Betrieb und induzierter Wechselspannung erhebt sich das Problem, die Wechselspannung bzw. deren Halbwellen in für den Zeitgeber auswertbare Signale umzuformen, welche zum Einsatz an sich bekannter Digitaltechnologie gegenüber Bezugspotential unipolar sind. Unter diesem Gesichtspunkt besteht eine Ausbildung der Erfindung darin, daß dem Anpaßmodul Wechselspannungs-Halbwellen zugeführt werden, die von sowohl dem einen Pol als auch dem entgegengesetzten Pol einer Induktionsspule abgegriffen werden. Damit erhalten die in der Induktionsspule mit entgegengesetzten Vorzeichen induzierten Spannungen gegenüber dem Anpaßmodul bzw. dessen Bezugspotential übereinstimmende Richtungen. Alternativ kann die negative Wechselspannungs-Halbwelle dem Anpaßmodul über einen Inverter beispielsweise in Form eines pnp-Transistors in Emitterschaltung zugeführt werden.

Damit der Zeitgeber über sein Sperrsignal auf den Zündschalter einwirken kann, ist nach einer Weiterbildung der Erfindung dem Zeitgeber ein Sperrschaltglied nachgeordnet, das bei Ansteuerung bzw. Betätigung durch das Sperrsignal dem Betätigungseingang des Zündschalters gegen Masse kurzschließt. Gelangt dann Wechselspannung an den Betätigungseingang, so wird auch diese kurzgeschlossen und kann so keine Zündung auslösen.

Soll, bevor die Drehzahlbegrenzung durch den Zeitgeber einsetzt, noch eine Spätverstellung der Zündung gegenüber einer Bezugs-Drehstellung der Maschine (z. B. oberer Totpunkt) erfolgen, kann dies im Rahmen der Erfindung wie folgt realisiert werden: dem Ansprech-, Start-, gegebenenfalls Rücksetzeingang des Zeitgebers wird unmittelbar ein Verzögerungsmodul beispielsweise in Form eines RC-Tiefpasses vorgeschaltet; dessen die Verzögerung realisierende Zeitkonstante ist im Hinblick auf die gewünschte Spätverstellung des Zündzeitpunkts gewählt und wirkt sich unmittelbar im Bereich der Drehzahl-Obergrenze der Maschine aus. In diesem Bereich ist bei Auftreten von Wechselspannung die vom Zeitgeber generierte Zeitdauer bzw. Wartezeit bis auf eine kleine Restzeit bereits abgelaufen; das Verzögerungsglied verzögert den Eingang eines Rücksetz- bzw. Startsignals in den Zeitgeber jedoch über die Restzeit hinaus, so daß noch eine spätverstellte Zündung erfolgen kann.

Mit Vorteil ist für das Zeitgeber-Modul ein Impuls- oder Taktgenerator als Zeitreferenz vorgesehen, dessen Takt- oder Impulsausgang nach einer logischen UND-Verknüpfung mit dem Sperrsignal des Zeitgebermoduls einer zugehörigen Zähleinrichtung zugeführt wird. Insbesondere wenn das Zeitgeber-Modul mittels eines Zählerbausteins realisiert ist, kann das davon erzeugte Sperrsignal auch den Eingang der zu zählenden Impulse aus dem Taktgenerator verhindern, indem das als Torschaltung zum Zählereingang dienende UND-Gatter gesperrt wird.

Insbesondere wenn das Zeitgeber-Modul auf der Basis eines Vorwahl-Zählerbausteins realisiert ist, muß die Vorwahlzahl, bei dessen Erreichen das Verzögerungssignal erzeugt wird, höher sein als die Vorwahlzahl für das Sperrsignal. Deshalb darf das Zeitgeber-Modul, insbesondere der Zählerbaustein, beim Zählen nicht angehalten werden, wenn die Vorwahlzahl für das Sperrsignal erreicht ist. Dem trägt eine Erfindungsweiterbildung dadurch Rechnung, daß der Takt- oder Impulsausgang des genannten Takt- oder Impulsgebers ausschließlich mit dem Verzögerungssignal UND-verknüpft ist.

Weitere Merkmale, Einzelheiten und Vorteile der Erfindung ergeben sich aus der nachfolgenden Beschreibung bevorzugter Ausführungsbeispiele der Erfindung sowie anhand der Zeichnung. Darin zeigen:

Fig. 1     eine für die Erfindung vorteilhafte Ausführung des Magnetgenerators in axialer Draufsicht,

Fig. 2     eine schaltungstechnische Realisierung eines Teils der Erfindung,

Fig. 3     eine abgewandelte schaltungstechnische Realisierung eines Teils der Erfindung, und

Fig. 4     anhand der Impulsdiagramme a)-c) die Funktionsweise der Schaltungen nach Figur 2 und/oder Figur 3.

Fig. 5     eine weiter abgewandelte schaltungstechnisch vollständige Realisierung der Erfindung, und

Fig. 6     die aus der Schaltungsvariante nach Fig. 5 resultierende Zündeverstellkurve für den Betrieb der Brennkraftmaschine.

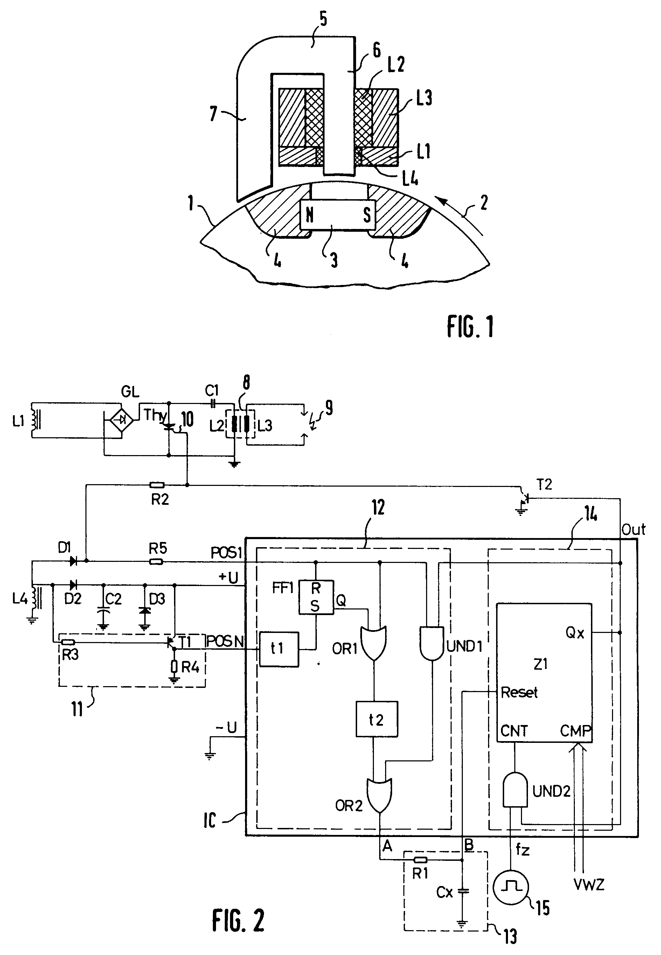

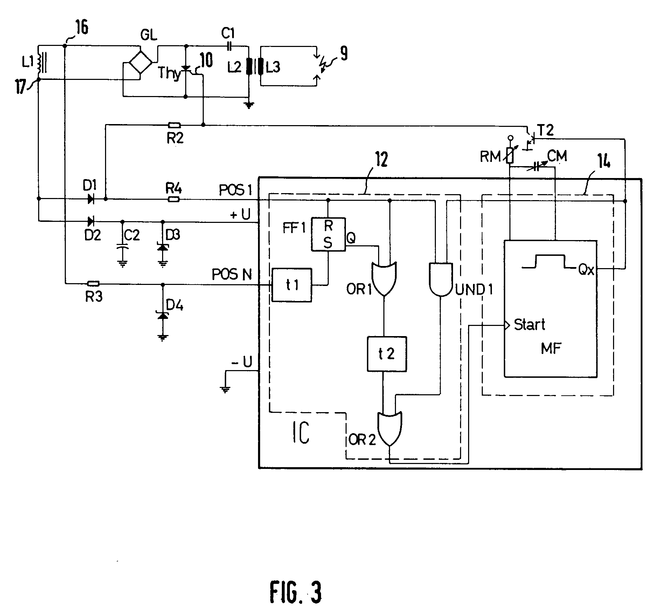

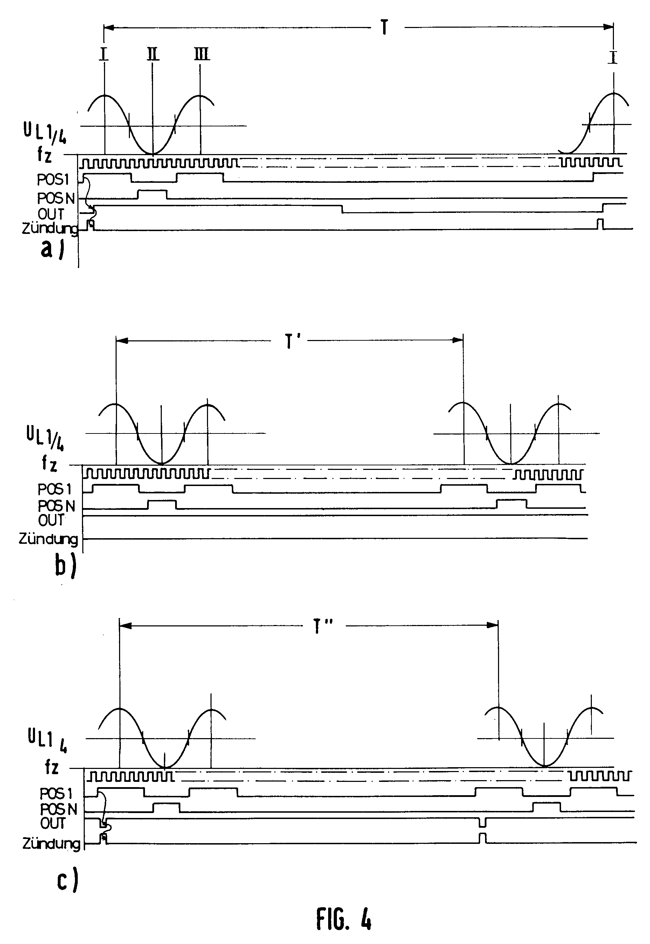

Der in Figur 1 dargestellte Magnetgenerator weist ein Polrad 1 auf, welches von der (nicht dargestellten) Brennkraftmaschine über deren Kurbelwelle in Drehrichtung 2 entgegen dem Uhrzeigersinn rotiert wird. An dessen äußeren Umfang ist ein Dauermagnet 3 mit tangential versetzten Polen N, S angeordnet, welche von Polschuhen 4 zu deren Magnetisierung umgeben sind. Diese Magnetanordnung wird bei Drehung 2 an einen ferromagnetischen Eisenkern 5 mit U-Profil vorbeibewegt, dessen erster Schenkel 6 von einer Spulenanordnung L1, L2, L3, L4 umgeben ist, während dessen zweiter Schenkel 7 keine Spulen aufweist. Die Spulenanordnung besteht aus vier zum ersten Schenkel 6 konzentrisch angeordneten Spulen L1 bis L4. Deren Funktion wird aus den in Figur 2 und 3 gezeigten Schaltungsanordnungen sowie aus den Signal/Zeit-Diagrammen in Figur 4 ersichtlich.

Wird aufgrund der Rotation des Polrads 1 in der ersten Ladespule L1 Wechselspannung induziert, lädt diese über einen Vollweggleichrichter GL beispielsweise in Graetz-Schaltung einen Zündkondensator C1 auf. Die zweite Spule L2 bzw. die dritte Spule L3 der genannten Spulenanordnung bilden zusammen die Primär- bzw. Sekundärwicklung eines Zündtransformators 8. Die Primärspule L2 liegt in Serie mit dem Zündkondensator C1, bei dessen Entladung über einen im Beispiel als Thyristor ausgeführten Zündschalter Thy am Ausgang des Zündtransformators 8 ein Hochspannungs-Zündsignal 9 entsteht. Der Steuer- bzw. Betätigungseingang 10 des Zündschalters Thy ist mittelbar über den ohmschen Widerstand R2 und der dahinter geschalteten Diode D1 mit der einen Polklemme der vierten - der Triggerung der Zündung 9 dienenden - Triggerspule L4 verbunden, deren entgegengesetzte Polklemme auf Bezugspotential bzw. Masse gelegt ist. Aufgrund der nur Positive Wechselspannungs-Halbwellen durchlassenden Diode D1 wird der Schalter Thy über seinen Betätigungseingang 10 nur bei gegenüber Bezugspotential positiv induzierten Halbwellen in der Triggerspule L4 angesteuert. Aus diesen Halbwellen wird ferner über eine weitere, positive Halbwellen durchlassende Diode D2 in Verbindung mit der nachgeordneten Parallelschaltung aus gepoltem Versorgungskondensator C2 und spannungsstabilisierender Zener-Diode D3 eine Versorgungsspannung +U für den nachgeschalteten integrierten Schaltkreis IC abgeleitet. Dieser liegt mit seinem weiteren Versorgungseingang -U auf gleichem Bezugspotential wie die Triggerspule L4 und weist für positive bzw. negative Wechselspannungs-Halbwellen aus der Triggerspule L4 jeweils einen Eingang POS1 bzw. POSN auf. Der Eingang POS1 ist über den ohmschen Widerstand R5 mit der Kathode der erstgenannten, positive Halbwellen durchlassenden Diode D1 verbunden. Gegenüber Bezugspotential bzw. Masse negativ induzierte Wechselspannungs-Halbwellen in der Triggerspule L4 werden mittels einer Invertierschaltung 11 invertiert bzw. umgepolt dem zweitgenannten Schaltkreis-Eingang POSN zugeführt. Die Invertierschaltung 11 wird im gezeichneten Beispiel aus dem im Emitterschaltung angeordneten pnp-Transistor T1 gebildet, der von der Signal-Polklemme der Triggerspule L4 über einen Widerstand R3 bei Auftreten negativer Halbwellen an seiner Basis angesteuert wird und diese kollektorseitig an den Eingang POSN weiterleitet; zur Erzeugung des entsprechenden Spannungsabfalls dient der Widerstand R4 zwischen Kollektor und Masse.

Wesentliche Funktionseinheiten des integrierten Schaltkreises IC sind das Anpassmodul 12 und der im Beispiel als Zeitgeber 14 dienende Vorwahlzähler Z1. Der positive Halbwellen-Eingang POS1 ist innerhalb des Anpassmoduls dem Rücksetzeingang eines RS-Flipflops FF1 sowie den Eingängen eines ODER-Gatters OR1 und eines UND-Gatters UND1 zugeführt. Der Eingang POSN für (ursprünglich) negative Halbwellen führt über ein Laufzeitglied t1 zum Setz-Eingang S des RS-Flipflop FF1. Dessen Ausgang Q ist mit dem zweiten Eingang des bereits genannten ODER-Gatters OR1 verbunden. Sein Ausgang ist über ein weiteres Laufzeitglied t2 mit dem ersten Eingang eines weiteren ODER-Gatters OR2 verbunden. Der zweite Eingang dieses Gatters OR2 ist direkt mit dem Ausgang des genannten UND-Gatters UND1 verbunden, welches den Ausgang Qx des Vorwahlzählers Z1 mit dem Signal des Eingangs POS1 verknüpft.

Das zweitgenannte ODER-Gatter OR2 bildet für den integrierten Schaltkreis IC einen Ausgang A, der über ein externes Verzögerungsglied 13 - im Beispiel ein RC-Tiefpaß mit dem seriell angeordneten Widerstand R1 und dem gegen Masse nachgeschalteten Kondensator Cx - mit einem weiteren Eingang B des integrierten Schaltkreises IC verbunden ist. Der Eingang B dient der Erzeugung eines Start- bzw. Rücksetzsignals ("Reset") für den Zeitgebermodul 14 bzw. Vorwahlzähler Z1. Das Zeitgebermodul 14 umfaßt neben dem Vorwahlzähler Z1 noch ein zweites UND-Gatter UND2, mittels welchem die Impulsfolge entsprechend einer Zählfrequenz $f_z$ eines externen Taktgenerators 15 mit dem Ausgang Qx des Vorwahlzählers Z1 UND-verknüpft, und seinem Zähleingang CNT zugeführt wird. Dadurch wird der Zählvorgang gestoppt, wenn der Vorwahlzähler Z1 über seinen Eingang CMP ein positives Vergleichsergebnis mit einer extern eingestellten Vorwahlzahl VWZ feststellt und daraufhin sein Ausgangssignal Qx inaktiviert bzw. zurücksetzt. Durch die Vorwahlzahl VWZ kann eine Grobeinstellung des Vorwahlzählers Z1 erfolgen, indem dessen Zählerstufen festgelegt werden; die Feineinstellung ist durch Veränderung der Zahlfrequenz $f_z$ aus dem Taktgenerator möglich.

Das Ausgangssignal Qx bildet auch den Sperrsignalausgang Out des integrierten Schaltkreises IC, welcher das Sperrschaltglied T2 - gebildet aus einem npn-Transistor in Emitterschaltung - ansteuert. Das Sperrschaltglied T2 legt bei Ansteuerung durch den aktivierten Sperrsignalausgang Out den Betätigungseingang 10 des Zündschalters Thy auf Masse bzw. Bezugspotential zwecks Zündverhinderung.

Die aus Figur 3 ersichtliche Schaltungsvariante ist gegenüber der nach Figur 2 wie folgt abgewandelt: Zum einen werden negative Spannungs-Halbwellen durch direkten Abgriff an einer Polklemme 16 der Ladespule L1 und nachfolgender Zuführung in gegenüber Bezugspotential positiver Stromrichtung an den entsprechenden Schaltkreis-Eingang POSN als positive Signale für das nachgeordnete Anpassmodul 12 gewonnen. Treten an der Abgriffstelle bzw. Polklemme 16 der Ladespule L1 Spannungshalbwellen umgekehrter Polarität auf, werden diese von der Diode D4 gegen Masse kurzgeschlossen. Mithin können der Transistor T1 und der Widerstand R4 gemäß Figur 2 weggelassen werden. Zum anderen ist der nach Figur 2 eingesetzte Vorwahlzähler Z1 mit UND-Gatter UND2 vorliegend durch ein Monoflop MF zur Bildung des Zeitgebermoduls 14 ersetzt. Das Monoflop MF ist extern mit einem Widerstand $R_M$ und einem Kondensator $C_M$ beschaltet, über deren Dimensionierung bzw. Verstellung die Dauer des nichtstabilen Zustands des Monoflops und mithin das vom Zeitgeber generierte Zeitintervall für die Aktivierung des Sperrsignalausgangs Out wählbar ist. Schließlich ist das externe Verzögerungsglied (vgl. Ziff. 13 in Figur 2) weggelassen und stattdessen der Ausgang des ODER-Gatters OR2 direkt dem Starteingang des Monoflops MF bzw. des Zeitgebers 14 zugeführt.

Nachfolgend wird die Funktionsweise der Schaltungsanordnung gemäß Figur 2 anhand der Signal/Zeit-Diagramme in Figur 4 näher erläutert.

Gemäß Diagramm 4a wird beim Vorbeibewegen des Nordpols N des Dauermagneten 3 am ersten mit der Spulenanordnung einschließlich der Triggerspule L4 bewickelten Schenkel 6 des U-Eisenkerns 5 unter anderem in der Ladespule L1 und der Triggerspule L4 eine Spannungshalbwelle I positiver Polarität induziert. Bewegt sich der Nordpol N nach Verlassen des Bereichs des ersten Schenkels 6 aufgrund der Drehung 2 am zweiten nicht bewickelten Schenkel 7 vorbei, gelangt zeitgleich der Südpol S in dem Bereich des ersten Schenkels 6. Dies führt zu einer vollständigen Ummagnetisierung des Eisenkerns 5, woraufhin die zweite Spannungshalbwelle II entgegengesetzter Polarität und höherer Amplitude entsteht. Verläßt der Nordpol N mit weiterer Drehung 2 den Bereich des zweiten Schenkels 7, den dann der Südpol S entsprechend magnetisiert, wird wieder eine Änderung des magnetischen Flusses durch die Spulenanordnung hervorgerufen; dies führt zur Induktion einer weiteren Spannungshalbwelle III, deren Polarität der zweiten Spannungshalbwelle II entgegengesetzt ist. Aufgrund der notwendigen Ummagnetisierungen liegen die Spannungshalbwellen II und III in zeitlich weiteren Abständen auseinander als die Spannungshalbwellen I und II (nicht gezeichnet). Nach einer vollständigen Umdrehung des Polrads wiederholt sich der beschriebene Spannungshalbwellen-Zyklus I-II-III mit der Periode T von neuem.

Den jeweils positiven Spannungshalbwellen I und III entspricht die unipolare Pulsfolge am Schaltkreis-Eingang POS1, und der negativen Halbwelle II die gleichartige Pulsfolge am Schaltkreiseingang POSN. Beim Beispiel nach Diagramm a war beim Auftreten des ersten POS1-Impulses das Sperrsignal Out aufgrund des Ablaufs des Zeitgeber-Zeitintervalls bereits zurückgesetzt, das heißt logisch "0". Nun führt der erste POS1-Impuls - nachdem er das ODER-Gatter OR1, das Laufzeitglied t2 und das zweite ODER-Gatter OR2 durchlaufen hat - zum Rücksetzen und Starten des Zeitgebers 14 (vgl. Figur 2). Gemäß Diagramm 4a führt also dieser erste POS1-Impuls mit entsprechender Zeitverzögerung zum Setzen des Sperrsignals Out. Dadurch wird die vorher mit dem ersten POS1-Impuls ausgelöste Zündung unmittelbar unterbunden.

Gemäß Diagramm 4b hat sich die Drehzahl der Brennkraftmaschine erhöht, so daß die Wechselspannungshalbwellen I, II und III mit gegenüber Diagramm 4a verkürzter Periodendauer T' auftreten. Diese ist dabei so kurz, daß der Vorwahlzähler Z1 beim Abzählen der der Zählfrequenz $f_z$ zugrundeliegenden Zählimpulse aus dem Taktgenerator 15 die zur Drehzahlbegrenzung eingestellte Vorwahlzahl VWZ (vgl. Figur 2) beim Auftreten des ersten POS1-Impulses noch nicht erreicht hat, also noch läuft. Er wird dabei von den drei Halbwellen I, II, III über die Eingänge POS1 bzw. POSN, das Speicherglied FF1 gegebenenfalls mit Zeitglied t1 und die Gatter OR1, OR2 mit Zeitglied t2 zurückgesetzt bzw. gestartet. Nach der dritten Halbwelle III beginnt der Vorwahlzähler Z1 wieder zu zählen. Infolgedessen herrscht für den Vorwahlzähler Z1 bei Überschreiten der Periodendauer T' für den Wechslspannungszyklus I-II-III ständig Zählbetrieb vor, so daß das Sperrsignal Out die Zündung kontinuierlich verhindert.

Gemäß Diagramm 4c befindet sich die Brennkraftmaschine in einem Drehzahlbereich, der zwischen dem nach Diagramm 4a und dem nach Diagramm 4b liegt; es gilt also:

$$T' < T'' < T.$$

Dabei überschreitet das vom Zeitgeber erzeugte Zeitintervall die entsprechende Periode T'' um derart wenige Zählstufen, daß das Sperrsignal Out noch während des Andauerns des ersten POS1-Impulses einer Periode T'' zurückgenommen wird. Aufgrund des Verzögerungsglieds 13 aus Figur 2 wird dieser erste POS1-Impuls mit einer Zeitverzögerung zum Start- bzw. Reseteingang des Vorwahlzählers Z1 bzw. Zeitgebers 14 durchgeschleift. Der erste POS1-Impuls kann den Zeitgeber 14 bzw. Vorwahlzähler Z1 über das UND-Gatter UND1 nicht sofort zurücksetzen, weil er über das Verzögerungsglied 13 verzögert wird. Erreicht der Vorwahlzähler dann seinen Endwert (Vorwahlzahl VWZ), während der erste POS1-Impuls noch andauert, wird das Sperrsignal Out inaktiv, und der Zündschalter Thy kann betätigt werden. Die Zündung erfolgte also eine bestimmte Zeit nach Eintreffen des ersten POS1-Impulses. Da dieses einen festen Bezug zur Kurbelwellenstellung der Brennkraftmaschine hat, und hier auch zweckmäßig der Zündzeitpunkt liegt, liegt gemäß Diagramm 4c eine spätverstellte Zündung vor. Die Zeitverzögerung durch das Verzögerungsglied 13 ist ausreichend, um die beim Auftreten des ersten POS1-Impulses begonnene Zündung 9 zur vollen Entfaltung kommen zu lassen, bis diese dann nach Ablauf der Zeitverzögerung durch (erneutes) Auftreten des Sperrsignals Out beendet wird.

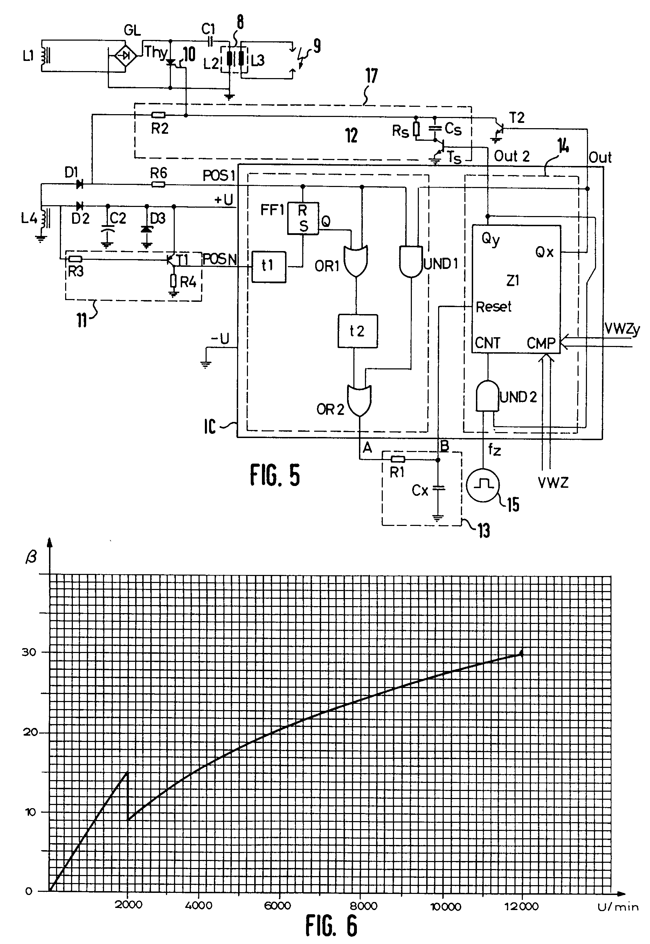

Die Schaltungsvariante nach Fig. 5 unterscheidet sich von der nach Fig. 2 dadurch, daß das Zeitgeber-Modul 14 in seinen Funktionen erweitert ist: Der im Beispiel zur Realisierung verwendete Vorwahlzäher Z1 steht über seinen Vergleichs-Eingang CMP mit einer weiteren extern eingestellten Vorwahlzahl VWZy in Wirkungsverbindung. Kommt es beim Abzählen der Impulse bzw. Zählfrequenz $f_z$ aus dem Taktgenerator 15 zu einem positiven Vergleichsergebnis bezüglich der zweiten Vorwahlzahl VWZy, wird dies durch Setzen eines zweiten Signalausgangs Qy des Zählerbausteins Z1 angezeigt; dies erfolgt analog dem Setzen des ersten Signalausgangs Qx bezüglich der ersten Vorwahlzahl VWZ. Das zweite Ausgangssignal Qy bildet das vom Zeitgeber-Modul 14 erzeugte Verzögerungssignal Out2, welches in gesetztem bzw. aktiven Zustand ein weiteres Verzögerungsglied 17 bestehend aus den Widerständen $R_2$, $R_s$, dem Kondensator $C_S$ und dem Schalttransistor $T_S$ ansteuert bzw. aktiviert. Zu diesem Zweck ist der Verzögerungssignal-Ausgang Out2 mit der Basis des Schalttransistors $T_S$ verbunden. Wird dieser vom Verzögerungssignal Out2 angesteuert, schaltet er die Parallelschaltung aus dem Widerstand $R_S$ und dem Kondensator $C_S$ nach Masse. Der Kondensator $C_S$ bildet dann zusammen mit dem Widerstand $R_2$ einen RC-Tiefpaß, über welchen von der Triggerspule L4 ausgehende und durch die Diode D1 gelangende, positive Wechselspannungshalbwellen verzögert zum Betätigungseingang 10 des Zündschalters bzw. Thyristors Thy gelangen. Dadurch wird die Entladung des Speicherkondensators C1 und die dadurch ausgelöste Zündung 9 entsprechend der Zeitkonstante des RC-Tiefpasses bzw. Verzögerungsgliedes 17 verspätet bewirkt.

Dies kann vorteilhaft für Stabilisierung der Leerlaufdrehzahl der Brennkraftmaschine ausgenutzt werden, wenn die Vorwahlzahl VWZy bezüglich des zweiten Zählerausgangs Qy größer ist als die Vorwahlzahl VWZ bezüglich des ersten Zählerausgangs Qx. Es gilt also

$$VWZy > VWZ.$$

Damit aber aufgrund dieses Verhältnisses der Zählerbaustein Z1 beim Erreichen der kleineren Vorwahlzahl VWZ nicht, wie nach Fig. 2, angehalten wird, sondern die spezifizierte Erzeugung des Verzögerungssignals Out2 durch den zweiten Zählerausgangs Qy gewährleistet bleibt, ist dieser mit der Zählfrequenz fz aus dem Taktgenerator 15 über das Gatter UND2 logisch UND-verknüpft.

Die Wirkungsweise der Schaltungsvariante nach Fig. 5 wird weiter anhand von Fig. 6, die die Zündwinkel-Frühverstellung $\beta$ in Grad über die Drehzahl in Umdrehungen pro Minute zeigt. Hier ist die Vorwahlzahl VWZy so eingestellt, daß das Verzögerungssignal Out2 bis zu einer Maschinendrehzahl von etwa 2000 U/min. auf "low" liegt, d. h. inaktiv ist. Bei etwa 2000 U/min. wird der zweite Ausgang des Zählers Z1 "active high", also gesetzt, und das weitere Verzögerungsglied 17 mittels des durchgeschalteten Schalttransistors $T_s$ eingeschaltet. Dies erzeugt einen Einbruch der Zündverstellkurve bei 2000 U/min., der der Stabilisierung der Leerlaufdrehzahl dient. Die so verminderte Frühverstellung der Zündung steigt mit zunehmender Drehzahl weiter an, bis 12 000 U/min. erreicht sind. Diese Drehzahl entspricht dem Wert der ersten Vorwahlzahl VWZ, bei dessen Erreichen die Zündung 9, wie oben erläutert, gesperrt wird. Die zweite Vorwahlzahl VWZy kann auch durch Einsatz interner Teilerstufen innerhalb des Zählerbausteins Z1 realisiert werden. Dadurch kann ein gesonderter Eingang für die zweite Vorwahlzahl entfallen.

**Patentansprüche**

1.   Zündanlage für Brennkraftmaschinen, mit einem Magnetgenerator (Fig. 1), der abhängig von der Maschinen-Drehstellung eine Lade-Wechselspannung (I - III) für ein Energiespeicherelement (C1) induziert, das von einem synchron zu der Wechselspannung (I - III) betätigten Zündschalter (Thy) zum Auslösen der Zündung (9) entladen wird, mit einem Zeitgeber-Modul (14), das auf die Wechselspannung (I - III) mit der Erzeugung eines Betätigungs-Sperrsignals (Out) für den Zündschalter (Thy) für die Dauer eines ersten Zeitintervalls ($f_z$, VWZ) anspricht, welches einer Drehzahl-Obergrenze für die Brennkraftmaschine entspricht, dadurch gekennzeichnet, daß das Zeitgeber-Modul (14) auf die Wechselspannung (I-III) mit der Erzeugung eines separaten Verzögerungssignals (Out2, Qy) zur verzögerten Betätigung des Zündschalters (Thy) für die Dauer eines zweiten längeren Zeitintervalls (VWZy, $f_z$) anspricht, das einer Drehzahl-Untergrenze, vorzugsweise der Leerlaufdrehzahl (Fig. 6), der Maschine entspricht.

2.   Zündanlage nach Anspruch 1, dadurch gekennzeichnet, daß der Zeitgeber (14) als Vorwahlzähler (Z1), Zeitschalter oder Monoflop (MF), die jeweils mittels der Wechselspannung (I - III) in ihren Ausgangszustand rücksetzbar sind, oder als programmierbarer Zähler und/oder Software-Routine eines die Wechselspannung sensierenden Mikrocomputers realisiert ist.

3.   Zündanlage nach Anspruch 1 oder 2, gekennzeichnet durch ein Anpaßmodul (12), mittels welchem pro Maschinenumdrehung eine oder mehrere Wechselspannungs-Halbwellen (I, II, III) - gegebenenfalls nach deren Gleichrichtung oder Invertierung (11), - dem Zeitgeber (14) zu dessen Rücksetzen (Reset) selektiert zugeführt werden.

4.   Zündanlage nach Anspruch 3, gekennzeichnet durch ein oder mehrere, jeweils einer Halbwelle (I, II, III) zugeordnete Laufzeitglieder ($t_1$, $t_2$) die eine Zeitverzögerung entsprechend der Mindest-Betätigungszeit des Zündschalters (Thy) realisieren.

5.   Zündanlage nach Anspruch 4, dadurch gekennzeichnet, daß pro Maschinen-Umdrehung (T) wenigstens eine Halbwelle (I, II, III), vorzugsweise die erste (I), dem Zeitgeber (14) zusätzlich unter logischer UND-Verknüpfung (UND1) mit dessen Sperrsignal-Ausgang (Out) zugeführt wird.

6.   Zündanlage nach einem der Ansprüche 3 - 5, mit mehr als zwei induzierten Halbwellen (I, II, III) pro Maschinen-Umdrehung (T), gekennzeichnet durch ein Speicherelement, beispielsweise Flipflop (FF1), für ein dem Zeitgeber (14) zum Rücksetzen (Reset) zugeführtes Merksignal derart, daß es von einer Halbwelle (II) geladen und einer anderen vorausgehenden und/oder nachfolgenden Halbwelle (I, III) gelöscht wird.

7.   Zündanlage nach einem der Ansprüche 3 - 6, dadurch gekennzeichnet, daß das Anpaßmodul (12) - gegebenenfalls einschließlich der Laufzeitglieder ($t_1$, $t_2$) des UND-Gatters (UND1) und/oder des Speicherelements (FF1) - mit dem Zeitgeber (14) baulich zu einem integrierten Schaltkreis (IC) zusammengefaßt ist.

8.   Zündanlage nach einem der Ansprüche 3 - 7, dadurch gekennzeichnet, daß dem Anpaßmodul (12) Wechselspannungs-Halbwellen (I, II, III) zugeführt werden, die von sowohl dem einen Pol (17) als auch dem entgegengesetzten Pol (16) einer Induktionsspule (L1) abgegriffen sind.

9.   Zündanlage nach einem der Ansprüche 3 - 7, dadurch gekennzeichnet, daß dem Anpaßmodul (12) gegenüber Bezugspotential negative Wechselspannungs-Halbwellen (II) über einen pnp-Transistor in Emitterschaltung (11, T1) zugeführt werden.

10. Zündanlage nach einem der vorherigen Ansprüche, dadurch gekennzeichnet, daß zur Stromversorgung des Zeitgeber- und/oder gegebenenfalls Anpaßmoduls (14, 12) oder integrierten Schaltkreises (IC) ein weiteres Energiespeicherelement (C2) angeordnet ist, das über die induzierte Wechselspannung (I-III) aufgeladen wird.

11. Zündanlage nach einem der vorherigen Ansprüche, gekennzeichnet durch ein dem Zeitgeber (14) nachgeschaltetes Sperrschaltglied (T2), das bei Ansteuerung durch das Sperrsignal (Out) den Betätigungseingang (10) des Zündschalters (Thy) gegen Masse kurzschließt.

12. Zündanlage nach einem der vorherigen Ansprüche, dadurch gekennzeichnet, daß dem Ansprech-, gegebenenfalls Rücksetzeingang (Reset, Start) des Zeitgebers (14) ein Verzögerungsmodul (13), beispielsweise RC-Tiefpaß, unmittelbar vorgelagert bzw. vorgeschaltet ist, dessen realisierte Verzögerungszeit einer Spätverstellung des Zündzeitpunkts (Fig. 4c) entspricht, wenn die Maschine nahe unterhalb ihrer Drehzahl-Obergrenze betrieben wird.

13. Zündanlage nach einem der vorhergehenden Ansprüche, gekennzeichnet durch einen Impuls- oder Taktgenerator (15) als Zeitreferenz für das Zeitgeber-Modul (14), dessen Takt- oder Impulsausgang ($f_z$) mit dem Sperrsignal (Out, Out2) logisch UND-verknüpft (UND2) einer Zähleinrichtung (Z1, CNT) des Zeitgeber-Moduls (14) zugeführt wird.

14. Zündanlage nach einem der vorherigen Ansprüche, gekennzeichnet durch ein vom Verzögerungssignal aktivierbares Verzögerungsglied (17), vorzugsweise RC-Tiefpaß, über das die induzierte Wechselspannung (I-III) dem Betätigungseingang (10) des Zündschalters (Thy) zu dessen Triggerung zugeführt wird.

15. Zündanlage nach Anspruch 13 und 14, dadurch gekennzeichnet, daß der Takt- oder Impulsausgang ($f_z$) einzig mit dem Verzögerungssignal (Out2) UND-verknüpft ist.

FIG. 1

FIG. 2

FIG. 3

FIG. 4

FIG. 5

FIG. 6